# EUROPÄISCHE PATENTANMELDUNG

(11) **EP 0 710 438 A1**
(43) Veröffentlichungstag der Anmeldung: **08.05.1996**
(21) Anmeldenummer: 95111945.2
(22) Anmeldetag: 29.07.1995
(51) Int. Cl.: A01K 1/015

(54) **Verfahren zur Herstellung von Einstreu für die Kleintierhaltung**

(30) Priorität: 10.08.1994 CH 19940002472
(71) Anmelder: Tanner, Peter, CH-5610 Wohlen (CH)
(72) Erfinder: Tanner, Peter, CH-5610 Wohlen (CH)
(74) Vertreter: Ballmer, Ulrich, et al

(57) **Zusammenfassung**

Ein Verfahren zur Herstellung von Einstreu für die Kleintierhaltung, bei dem Baumrinden sowie Holz-, Nadel- und Laubreste auf Partikelgrössen von etwa 20 mm maximal zerkleinert werden. Anschliessend erfolgt eine Mischung der Partikelgrössen von etwa 0,7 bis 20 mm und 0,1 bis 0,6 mm. Diese Mischung wird dann bei 110-120°C trockenerhitzt und nach der Erhitzung entstaubt.

## Beschreibung

Die Erfindung bezieht sich auf ein Verfahren zur Herstellung von EinstreufürdieKleintierhaltung. Bei bekannten Verfahren dieser Art werden die mehr oder weniger grossen Partikel des Einstreumaterials durch Grobmahlung, Schrotung, Blähverformung von Grundstoffen mineralischer bzw. pflanzlicher Herkunft oder auch aus Kunststoffen gewonnen.

Diese Verfahren erfordern durchweg einen mehr oder weniger grossen technischen Aufwand, und die Grundstoffe, insbes. die auf der Basis von Kunststoffen hergestellten sind verhältnismässig teuer. Hinzu kommt, dass die so hergestellte Einstreu häufig nicht oder nur schwer kompostier- und abbaubar bzw. verbrennbar ist.

Der Erfindung liegt die Aufgabe der Schaffung eines Verfahrens zur Herstellung einer Einstreu zugrunde, bei dem die oben geschilderten Nachteile nicht auftreten, und mit dem eine Einstreu gewonnen wird, die bei ihrem Gebrauch Vorteile mit sich bringt und nach Gebrauch bei ihrer Beseitigung keine Schwierigkeiten bereitet.

Diese Aufgabe wird dadurch gelöst, dass Baumrinden sowie Holz-, Nadel- und Laubreste auf Partikelgrössen von maximal etwa 20 mm zerkleinert, anschliessend die Partikelgrössen von etwa 0,7 bis 20 mm und 0,1 bis 0,6 mm gemischt werden, und die Mischung bei etwa 110-120°C trockenerhitzt und dann entstaubt wird. Das Gewichtsverhältnis der Partikelgrössen kann erfindungsgemäss vorteilhaft etwa 40:60 ausmachen.

Mit der erfindungsgemässen Durchmischung unterschiedlicher Partikelgrössen wird eine grosse Saugfähigkeit der Einstreu erreicht und damit eine trockene Haltung der Tiere gewährleistet. Da sich beim Einbringen der Einstreu die feinen Bestandteile im unteren Bereich sammeln und die gröberen darüber, wirken die so entstandenen Lageschichten wie eine saugfähige Matte und die groberen Bestandteile wirken zusätzlich wie die sonst üblichen Lattenroste. Die Saugfähigkeit der beiden Lageschichten und der inhärente Anteil aromatischer Harze aus dem Grundmaterial unterbinden das Entstehen von Gerüchen aus dem Tierurin, die Tierhalter und auch Tiere belästigen würden. Durch die verfahrensmässige Entstaubung wird auch das Entstehen von Staubbelästigungen vermieden.

Da die verwendeten Grundmaterialien ein relativ hohes Schüttgewicht aufweisen, stellt sich das, bei Verwendung anderer Materialien, wie z.B. Hobelspänen auftretende Problem der Volumenausdehnung bei der erfindungsgemässen Einstreu nicht.

Die Grundmaterialien fallen in der Waldwirtschaft als Abfallprodukt in grossen Mengen an und sind deshalb leicht und zu relativ niedrigen Preisen erhältlich.

Die Entsorgung der gebrauchten Einstreu bereitet keine Schwierigkeiten; sie kann z.B. als Abdeckmaterial im Garten oder als Kompostbeigabe verwendet werden. Bei der Verbrennung mit anderem Kehricht ergibt sich im Gegensatz zu zahlreichen anderen Einstreuprodukten z.B. solchen, die auf einer Mineralbasis beruhen, nur ein vernachlässigbarer Rest von Leichtasche.

Die erfindungsgemässe Einstreu ist zur Verwendung in Trockenoder Feuchtterrarien und auch in Volieren für Tiere verschiedenster Art, insbes. für Nagetiere geeignet.

## Patentansprüche

1. Verfahren zur Herstellung von Einstreu für die Kleintierhaltung,
**dadurch gekennzeichnet,**
**dass** Baumrinden sowie Holz-, Nadel- und Laubreste auf Partikelgrössen von maximal etwa 20 mm zerkleinert, anschliessend die Partikelgrössen von etwa 0,7 bis 20 mm und 0,1 bis 0,6 mm gemischt werden, und die Mischung bei etwa 110-120°C trokkenerhitzt und dann entstaubt wird.

2. Verfahren nach Anspruch 1,
**dadurch gekennzeichnet,**
**dass** die Partikelgrössen in einem Gewichtsverhältnis von etwa 40:60 gemischt werden.

3. Einstreu, hergestellt nach dem Verfahren nach Anspruch 1,
**gekennzeichnet durch**
eine trockene, staubfreie Mischung von zerkleinerten Baumrinden sowie Holz-, Nadel- und Laubresten mit Partikelgrössen zwischen 0,7 bis 20 mm und 0,1 bis 0,6 mm in einem Gewichtsverhältnis von etwa 40:60.
